(19) Europäisches Patentamt
European Patent Office
Office européen des brevets

(11) **EP 4 574 486 A1**

(12) **DEMANDE DE BREVET EUROPEEN**

(43) Date de publication:
**25.06.2025 Bulletin 2025/26**

(21) Numéro de dépôt: **24220381.8**

(22) Date de dépôt: **16.12.2024**

(51) Classification Internationale des Brevets (IPC):
**B60J 10/21** (2016.01)     **B60J 10/265** (2016.01)
**B60J 10/76** (2016.01)     **B60J 10/88** (2016.01)

(52) Classification Coopérative des Brevets (CPC):
**B60J 10/21; B60J 10/265; B60J 10/76; B60J 10/88**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **22.12.2023 FR 2315059**

(71) Demandeur: **HUTCHINSON**
**75008 Paris (FR)**

(72) Inventeurs:
• **BLOTTIAU, Olivier**
**45200 Amilly (FR)**

• **LAJOUX, Cyril**
**45700 Vimory (FR)**
• **BELLI, Hubert**
**75008 Paris (FR)**
• **SEGOND, Benjamin**
**75008 Paris (FR)**
• **EMO, Franck**
**75008 Paris (FR)**

(74) Mandataire: **Gevers & Orès**
**Immeuble le Palatin 2**
**3 Cours du Triangle**
**CS 80165**
**92939 Paris La Défense Cedex (FR)**

(54) **COULISSE POUR UN CADRE DE VITRE MOBILE D'UN VEHICULE ET SON PROCEDE DE FABRICATION**

(57)     Coulisse (1) pour un cadre (12) de vitre mobile d'un véhicule, cette coulisse comprenant au moins des premier et second profilés (2, 3) comportant chacun au moins une lèvre d'étanchéité (222-228, 262, 264) et reliés entre eux de façon sécante par au moins une portion (4) de liaison, le premier profilé (2) comportant un revêtement (24) de finition d'aspect qui comprend au moins une finition choisie parmi une brillance, une colo-ration et un état de surface, dans lequel le premier profilé (2) est formé par co-extrusion avec ledit revêtement (24) de finition d'aspect, le second profilé (3) est formé par co-extrusion, ladite au moins une portion (4) de liaison est formée par un matériau de surmoulage, et la coulisse comprend un embout (5) de finition d'aspect qui est situé à au moins une extrémité longitudinale (22a, 22b) du premier profilé (2) et du revêtement (24).

[Fig.5]

EP 4 574 486 A1

**Description**

**Domaine technique de l'invention**

La présente invention concerne le domaine des véhicules, par exemple automobiles. Plus particulièrement, la présente invention concerne une coulisse pour un cadre de vitre mobile d'un véhicule, et un procédé de fabrication d'une telle coulisse.

**Arrière-plan technique**

L'état de la technique comprend notamment les documents JP-A-2001322436, WO-A1-2014/188004 et JP-A-2007320369.

Il est connu qu'un véhicule automobile comprend plusieurs portes équipées chacune d'un caisson inférieur et d'un cadre supérieur. Le cadre supérieur, désigné également par le terme « cadre de vitre », est destiné à recevoir une vitre mobile (ou coulissant) du véhicule. Chaque porte comprend une coulisse ayant une partie située dans le caisson inférieur et une partie s'étendant au niveau du cadre de vitre, notamment autour de ce cadre de vitre. Cette coulisse permet de guider la vitre mobile qui coulisse dans la porte et assure de plus une étanchéité entre la porte et la vitre mobile.

La coulisse comprend en général un premier profilé (ou segment) supérieur horizontal et deux profilés verticaux, respectivement, second et troisième, reliés entre eux par le premier profilé. La coulisse a alors une forme générale en U inversé. Cette forme peut toutefois être plus complexe notamment si la coulisse est reliée à une vitre fixe. Chacun des profilés comprend au moins une lèvre d'étanchéité.

La porte peut également comprendre au moins un revêtement de finition d'aspect qui s'étend le long d'un des profilés, notamment le premier profilé, et un embout de finition d'aspect situé à une extrémité longitudinale de ce revêtement. Le revêtement de finition d'aspect est en général formé par un enjoliveur qui est rapporté sur le profilé et comporte une surface visible esthétique, par exemple typiquement chromé, brossé ou noir brillant.

Il existe différentes manières de réaliser une telle coulisse pour un cadre de vitre mobile. Un exemple de réalisation consiste à former séparément deux profilés, puis si nécessaire à le ou les mettre en forme par thermoformage pour le ou les ajuster à la forme du cadre de vitre. Ensuite, les profilés sont disposés dans un moule et une portion de liaison est formée par injection-moulage de façon à relier les profilés entre eux. L'enjoliveur formant le revêtement de finition d'aspect est rapporté et fixé sur l'un des profilés après montage de la coulisse. Enfin, l'embout de finition d'aspect est monté à l'extrémité longitudinale du profilé.

Cependant, la réalisation d'une telle coulisse de l'art antérieur et le montage de cette coulisse dans le véhicule peuvent être complexes, coûteux et longs. En effet, la forme particulière de la coulisse en U nécessite de déformer les profilés lors du montage et contraint à utiliser des matériaux souples ou déformables. Or, l'enjoliveur et l'embout de finition d'aspect sont généralement en matériau rigide (typiquement métallique). Ils sont donc montés sur l'un des profilés en fin de montage de la coulisse. Ceci ajoute des étapes supplémentaires à l'assemblage de la porte et par conséquent une complexité de montage supplémentaire.

Dans le cas où le revêtement de finition d'aspect serait formé directement sur l'enjoliveur, par une peinture par exemple, la déformation des profilés lors du montage pourrait générer des fissures dans le revêtement et ainsi l'endommager. En outre, ces fissures peuvent être visibles et ainsi altérer également l'aspect esthétique de la coulisse.

De plus, certaines parties de la coulisse (par exemple l'embout de finition d'aspect) ne sont pas particulièrement esthétiques et peuvent altérer l'esthétisme global du véhicule.

Dans ce contexte, il est intéressant de pallier au moins une partie des inconvénients de l'art antérieur, en proposant une coulisse pour un cadre de vitre mobile d'un véhicule qui soit plus esthétique et facile à réaliser et à assembler.

**Résumé de l'invention**

La présente invention propose une solution simple, efficace, économique et esthétique à au moins une partie des inconvénients précités.

A cet effet, l'invention concerne une coulisse pour un cadre de vitre mobile d'un véhicule, cette coulisse comprenant au moins des premier et second profilés comportant chacun au moins une lèvre d'étanchéité et reliés entre eux de façon sécante par au moins une portion de liaison, ledit premier profilé comportant un revêtement de finition d'aspect qui s'étend le long de ce premier profilé et qui comprend au moins une première finition choisie parmi une brillance, une matité, une coloration et un état de surface différente de celle du reste du profilé.

Selon l'invention, le premier profilé est formé par co-extrusion avec ledit revêtement de finition d'aspect ; le second profilé est formé par co-extrusion ; et ladite au moins une portion de liaison est formée par un matériau de surmoulage.

Selon l'invention, la coulisse comprend au moins un embout de finition d'aspect qui est situé à au moins une extrémité longitudinale dudit premier profilé et dudit revêtement de finition d'aspect, cet embout ayant au moins une seconde finition choisie parmi une brillance, une matité, une coloration et un état de surface.

La présente invention permet de manière générale de simplifier et de rendre plus facile la réalisation de la coulisse et son montage dans le véhicule, tout en améliorant son aspect esthétique. Pour cela, l'invention propose, d'une part, de co-extruder le premier profilé et le revêtement de finition d'aspect d'un seul tenant, et d'autre part, d'obtenir par surmoulage (ou moulage) la portion de liaison solidarisée d'un seul tenant avec les premier et second profilés dans un moule de fabrication. Les étapes de co-extrusion et de surmoulage de l'invention permettent de former de façon simple et rapide la coulisse en une seule pièce. Ceci permet d'éviter de réaliser des étapes supplémentaires (par exemple d'assemblage du revêtement de finition d'aspect sur le premier profilé, de thermoformage des profilés, etc.) et de réduire les coûts de production.

De plus, la réalisation de l'embout avec une finition particulière (par exemple identique ou différente au revêtement du premier profilé) permet de renforcer la finition esthétique de la coulisse.

Ainsi, la coulisse selon l'invention améliore significativement l'esthétisme global du véhicule.

Dans la présente demande, on entend par liaison de manière sécante le fait pour deux profilés de se croiser en un point, dit d'intersection. Pour cela, le premier profilé s'étend suivant un axe longitudinal et le second profilé s'étend suivant un axe d'allongement qui est sensiblement perpendiculaire (ou incliné) à l'axe longitudinal du premier profilé. Ces premier et second profilés sont reliés entre eux par la portion de liaison qui se situe sur le point d'intersection (ou dit autrement de rencontre entre les premier et second profilés).

Avantageusement, l'embout de finition d'aspect et/ou le revêtement de finition d'aspect ont une brillance supérieure ou égale à 70 UB à 60° et/ou un module de flexion compris entre 200 et 3000 MPa à température ambiante. Encore plus avantageusement, l'embout de finition d'aspect et/ou le revêtement de finition d'aspect comportent un matériau dépourvu de particule métallique, et ont une brillance supérieure ou égale à 70 UB à 60° et/ou un module de flexion compris entre 200 et 3000 MPa à température ambiante. Le module de flexion compris entre 700 et 3000 MPa présente plusieurs avantages, tels que permettre d'assurer une résistance à l'abrasion du revêtement et d'apporter une souplesse au revêtement pour éviter toute fissure/cassure du revêtement lors du montage de la coulisse sur un cadre comportant une courbure importante (à partir de 150mm).

La coulisse selon l'invention peut comprendre une ou plusieurs des caractéristiques suivantes, prises isolément les unes des autres ou en combinaison les unes avec les autres :

- l'embout de finition d'aspect et/ou le revêtement de finition d'aspect ont une matité inférieure ou égale à 10 UB à 60° et/ou un module de flexion compris entre 200 et 500MPa à température ambiante;
-- l'embout de finition d'aspect et/ou le revêtement de finition d'aspect comportent un matériau dépourvu de particule métallique, et ont une matité inférieure ou égale à 10 UB à 60° et/ou un module de flexion compris entre 200 et 500MPa à température ambiante ;
- l'embout de finition d'aspect et/ou le revêtement de finition d'aspect comportent un matériau avec un écart de couleur ΔE du type Lab inférieur à 15 ; préférentiellement cet écart ΔE est inférieur à 7 ; plus préférentiellement cet écart ΔE est inférieur à 5 ; encore plus préférentiellement cet écart ΔE est inférieur à 2 ;
-- l'embout de finition d'aspect et/ou le revêtement de finition d'aspect comportent un matériau dépourvu de particule métallique, avec un écart de couleur ΔE du type Lab inférieur à 15 ; préférentiellement cet écart ΔE est inférieur à 7 ; plus préférentiellement cet écart ΔE est inférieur à 5 ; encore plus préférentiellement cet écart ΔE est inférieur à 2 ;
- l'embout de finition d'aspect et/ou le revêtement de finition d'aspect comportent un matériau dépourvu de particule métallique ;
-- l'embout de finition d'aspect et/ou le revêtement de finition d'aspect est (ou sont) constitué(s) d'un matériau dépourvu de particule métallique ;
-- le revêtement de finition d'aspect recouvre une portion médiane d'une portion longitudinale à section en U du premier profilé, et éventuellement une paroi latérale de cette portion médiane ou un bras latéral qui s'étend dans le prolongement de la portion médiane ;
-- ladite portion médiane et ladite paroi latérale sont réalisées à base de polypropylène ;
-- le bras est réalisé à base de polypropylène ;
-- ledit embout de finition d'aspect recouvre un bord dudit revêtement de finition d'aspect ;
-- que ledit embout de finition d'aspect est rapporté ou formé par surmoulage d'un matériau d'aspect ;
- ledit revêtement de finition d'aspect, voire ledit embout de finition d'aspect, comprend une matière de finition d'aspect à base de polypropylène, polyoléfine thermoplastique styrénique (TPS), thermoplastique vulcanisé (TPV), élastomère thermoplastique styrénique (TPES) ou élastomère thermoplastique vulcanisé (TPEV), et/ou peut comprendre au moins un agent nucléant dans une proportion de 0,01 à 5% en poids ;
-- la matière de finition d'aspect à base de polypropylène présente une proportion au minimum d'environ 90% en poids par rapport au poids total du revêtement de finition d'aspect ou de l'embout de finition d'aspect ;

-- la matière de finition d'aspect à base de polypropylène présente une proportion comprise entre 90% et 99% en poids par rapport au poids total du revêtement de finition d'aspect ou de l'embout de finition d'aspect ;

-- la matière de finition d'aspect à base de polypropylène présente une proportion comprise entre 95% et 99% en poids par rapport au poids total du revêtement de finition d'aspect ou de l'embout de finition d'aspect ;

-- le matériau de surmoulage est choisi parmi un thermoplastique styrénique (TPS), thermoplastique vulcanisé (TPV), élastomère thermoplastique styrénique (TPES) et un élastomère thermoplastique vulcanisé (TPEV) ;

-- la coulisse est, de préférence intégralement, composée de matériaux recyclables à base de polypropylène ;

- les première et seconde finitions sont identiques ;

-- la première finition est une combinaison d'au moins deux premières finitions choisies chacune parmi une brillance, une matité, une coloration et un état de surface ;

-- la première finition est choisie parmi une coloration et/ou une brillance ;

- la seconde finition est choisie parmi une matité et/ou un état de surface ;

-- la première finition du revêtement de finition d'aspect est différente de la seconde finition de l'embout ;

- le revêtement de finition d'aspect présente une épaisseur inférieure à 1 mm, et de préférence l'épaisseur du revêtement est comprise entre 0,25 et 0,90 mm ;

-- les premier et second profilés comprennent chacun au moins deux lèvres d'étanchéité ;

-- la coloration de la première finition et/ou de la seconde finition peut être une coloration différente du noir.

En ce qui concerne l'agent nucléant, il permet d'obtenir une finition particulièrement esthétique, et en particulier une brillance améliorée par rapport à un matériau plastique dépourvu d'agent nucléant.

L'invention concerne en outre un véhicule, en particulier automobile, comportant au moins une coulisse selon l'invention.

L'invention concerne également un procédé de fabrication d'une coulisse selon l'une des particularités de l'invention. Le procédé comprend les étapes suivantes :

(a) réalisation des premier et second profilés indépendamment l'un de l'autre par coextrusion, chacun des premier et second profilés comportant au moins une lèvre d'étanchéité, le premier profilé comportant ledit revêtement de finition d'aspect qui est co-extrudé avec le reste de ce premier profilé,

(b) positionnement des premier et second profilés dans un moule,

(c) injection d'un matériau de surmoulage dans le moule pour former ladite au moins une portion de liaison desdits premier et second profilés, et

(d) formation ou montage de l'embout de finition d'aspect sur ladite extrémité longitudinale dudit premier profilé et dudit revêtement de finition d'aspect,

l'étape (d) étant réalisée avant l'étape (b), après l'étape (c), ou simultanément à l'étape (c).

Selon un premier exemple de réalisation du procédé, l'étape (d) de formation de l'embout de finition d'aspect peut être réalisée après l'étape (c) par surmoulage, dans un moule différent de celui utilisé pour l'étape (c) d'injection du matériau de surmoulage.

Selon un second exemple de réalisation du procédé, l'étape (d) de formation de l'embout de finition d'aspect est réalisée avant l'étape (b) par surmoulage dans un moule différent de celui utilisé pour l'étape (c) d'injection du matériau de surmoulage.

Selon un troisième exemple, l'étape (d) de formation de l'embout de finition d'aspect peut être réalisé avant l'étape (b) ou après l'étape (c), l'embout étant préalablement réalisé par injection-moulage.

Selon un quatrième exemple de réalisation du procédé, les étapes (c) et (d) peuvent être réalisées simultanément par injection ou bi-injection du matériau de surmoulage pour former l'au moins une portion de liaison, et d'un matériau d'aspect pour former ledit embout.

Selon une variante de réalisation de ce quatrième exemple, le matériau de surmoulage pour former la portion de liaison peut être identique au matériau d'aspect pour former l'embout. Ainsi, la portion de liaison et l'embout peuvent être constitués du même matériau.

Selon une autre variante de réalisation du quatrième exemple, les étapes (c) et (d) peuvent être réalisées par bi-injection lorsque le matériau de surmoulage pour former la portion de liaison est différent du matériau d'aspect pour former l'embout.

**Brève description des figures**

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :

La figure 1 est une vue schématique d'un côté extérieur d'une porte d'un véhicule automobile comportant un cadre de vitre pourvu d'une coulisse selon l'invention,

La figure 2 est une vue schématique partielle d'un côté extérieur de la coulisse de la figure 1,

La figure 3 est une vue schématique en coupe selon un plan II-II de la coulisse du cadre de vitre de la figure 2,

La figure 4 est une vue schématique en coupe selon le plan II-II d'une variante de la coulisse du cadre de vitre de la figure 2,

La figure 5 est vue schématique agrandie de la coulisse de la figure 2 comportant un embout de finition d'aspect selon un premier mode de réalisation ;

La figure 6 est une vue schématique de haut et en perspective de la figure 5 ;

La figure 7 est une vue schématique de côté et en perspective de la figure 5 ou 6 ;

La figure 8 est une vue schématique en perspective et partielle de la coulisse de la figure 2 avec l'embout de finition d'aspect selon un second mode de réalisation ;

La figure 9 est un schéma en bloc d'un procédé de fabrication de la coulisse de l'invention ;

La figure 10 est un schéma en bloc d'une première variante du procédé de fabrication de la coulisse de l'invention ;

La figure 11 est un schéma en bloc d'une seconde variante du procédé de fabrication de la coulisse de l'invention.

Les éléments ayant les mêmes fonctions dans les différentes mises en oeuvre ont les mêmes références dans les figures.

## Description détaillée de l'invention

Par convention, dans la description ci-après, les termes « longitudinal » et « axial » qualifient l'orientation d'éléments structurels s'étendant selon la direction d'un axe longitudinal. Les termes « radial » ou « vertical » qualifient une orientation d'éléments structurels s'étendant selon une direction perpendiculaire à l'axe longitudinal. On entend, par le terme « latéral », un élément structurel s'étendant sur un côté par exemple de l'axe longitudinal.

La présente invention s'applique de manière générale à un véhicule, par exemple automobile. Le véhicule peut comporter au moins un cadre de vitre mobile pourvu d'au moins une coulisse.

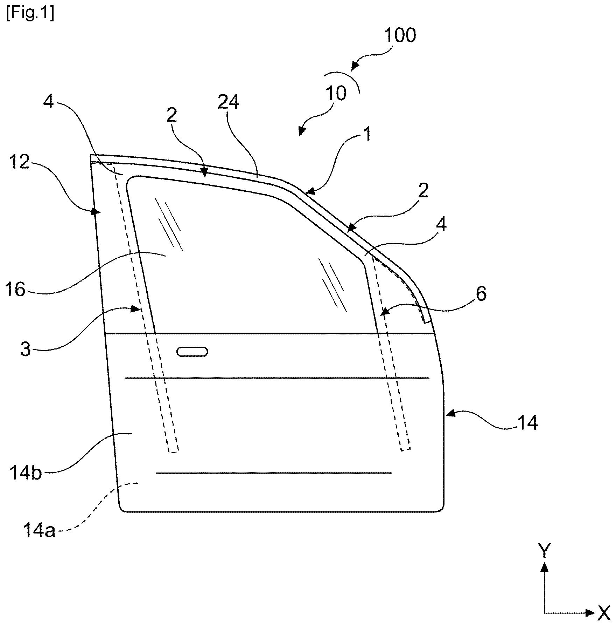

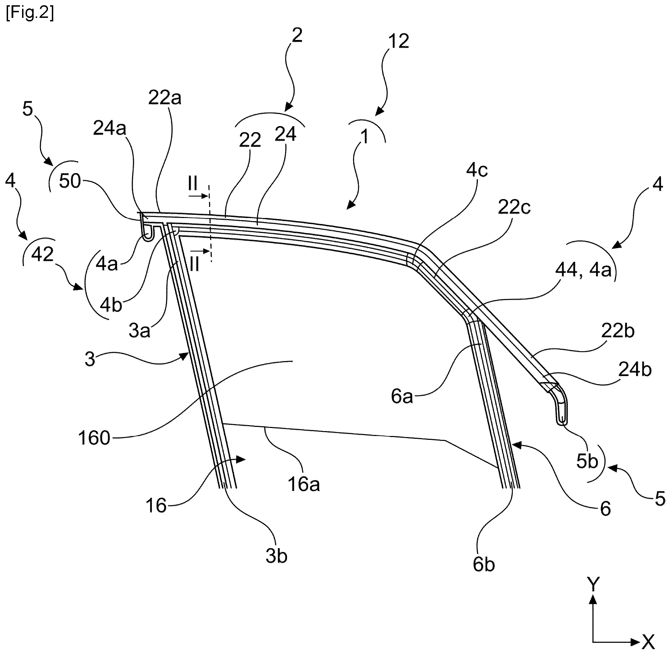

Les figures 1 et 2 illustrent un exemple d'une porte 10 d'un véhicule 100 et de sa coulisse 1. La porte 10 peut s'étendre suivant un axe longitudinal X (représenté suivant une direction horizontale sur les figures) et un axe d'allongement Y (représenté suivant une direction verticale sur les figures) qui est sensiblement perpendiculaire à l'axe X. Cette porte 10 est divisée en une première partie supérieure (par rapport à l'axe Y) formant un cadre 12 de vitre et une seconde partie inférieure (par rapport à l'axe Y) formant un caisson 14 inférieur.

Le caisson 14 peut comprendre un premier panneau intérieur 14a (par rapport à l'intérieur du véhicule) et un premier panneau extérieur 14b (par rapport à l'extérieur du véhicule). Ces premiers panneaux intérieur et extérieur 14a, 14b sont configurés pour loger au moins une partie d'une vitre 16 de la porte 10. Cette vitre 16 est mobile (ou coulissante) de haut en bas, et inversement. Les premiers panneaux intérieur et extérieur 14a, 14b peuvent être réalisés à partir d'une tôle en acier ou de tout autre matériau approprié.

Le cadre 12 de vitre peut fonctionner comme un châssis maintenant au moins un bord périphérique 16a de la vitre 16 lorsqu'elle est en position haute. Le cadre 12 de vitre comprend une ouverture 160 de vitre, et la vitre 16 est configurée pour couvrir ou découvrir cette ouverture 160 respectivement dans ses positions haute et basse.

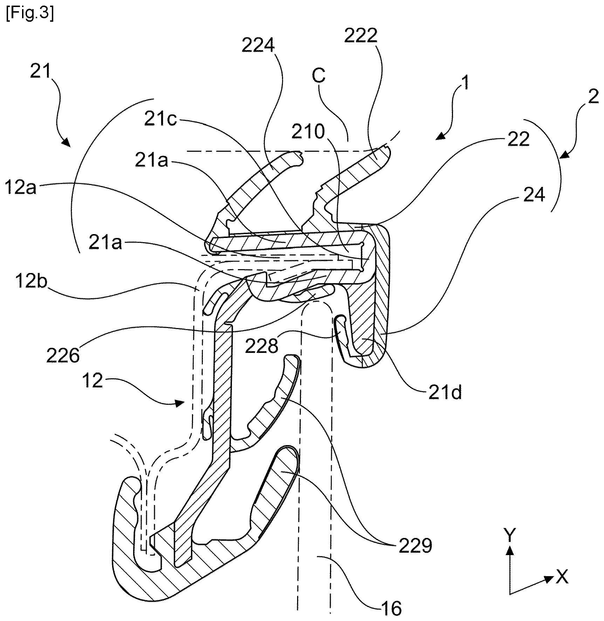

Le cadre 12 de vitre peut comprendre des seconds panneaux intérieur 12a et extérieur 12b, tels qu'illustrés à titre d'exemple sur la figure 3. Les seconds panneaux intérieur et extérieur 12a, 12b peuvent être réalisés à partir d'une tôle en acier ou de tout autre matériau approprié. Ces seconds panneaux intérieur et extérieur 12a, 12b permettent de former un support pour le montage d'une coulisse 1.

Tel que décrit précédemment, la coulisse 1 présente une partie située dans le caisson 14 et une partie s'étendant autour du cadre 12 de vitre.

La coulisse 1 selon l'invention va maintenant être décrite en référence aux figures 1 à 7. Cette coulisse 1 permet de guider la vitre 16 à coulisser dans la porte 10 et d'assurer une étanchéité entre la porte 10 et la vitre 16.

La coulisse 1 peut présenter une forme générale en U, V ou L.

La coulisse 1 comprend au moins des premier 2 et second 3 profilés reliés entre eux de façon sécante par au moins une portion de liaison 4. Chacun des premier 2 et second 3 profilés comprend au moins une lèvre d'étanchéité 222-228, 262, 264.

Le premier profilé 2 peut s'étendre longitudinalement le long de l'axe X. Le premier profilé 2 peut comprendre une portion longitudinale 22.

La portion longitudinale 22 peut comprendre des première 22a et seconde 22b extrémités longitudinales opposées l'une de l'autre. Ainsi, la portion longitudinale 22 peut s'étendre entre les première 22a et seconde 22b extrémités longitudinales de façon monobloc et d'un seul tenant (c'est-à-dire venue de matière). La portion longitudinale 22 peut être incurvée notamment de façon régulière d'une extrémité à l'autre. La seconde extrémité longitudinale 22b peut être inclinée par rapport à la première 22a extrémité longitudinale, par exemple radialement vers le corps 14 de la porte (par rapport à l'axe Y).

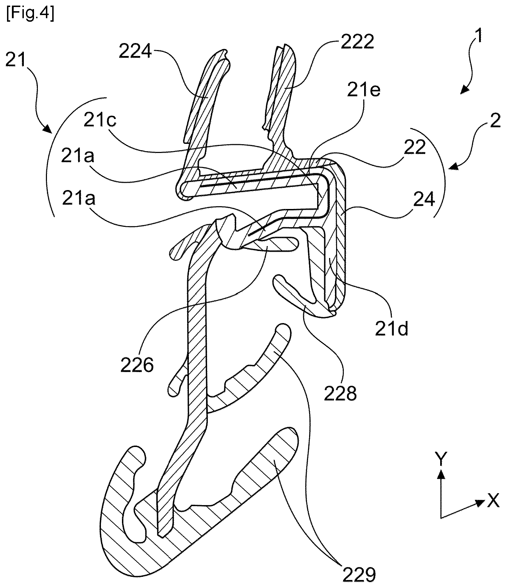

En référence aux figures 3 et 4, la portion longitudinale 22 peut comprendre des première 222 et seconde 224 lèvres d'étanchéité, dites lèvres supérieures. Ces première 222 et seconde 224 lèvres supérieures peuvent s'étendre en saillie radiale et le long de la portion longitudinale 22 et de l'axe X. Les première 222 et seconde 224 lèvres supérieures peuvent être parallèles l'une par rapport à l'autre. Les première 222 et seconde 224 lèvres supérieures peuvent être configurées pour être en contact avec un élément de carrosserie C du véhicule 100 lorsque la porte 10 est en position fermée. La portion longitudinale 22 peut comprendre des première 226 et seconde 228 lèvres d'étanchéité, dites lèvres intermédiaires. Ces première 226 et seconde 228 lèvres intermédiaires peuvent s'étendre en saillie radiale et le long de la portion longitudinale 22 et de l'axe X. Sur l'exemple de la figure 3, la première 226 lèvre intermédiaire peut s'étendre sensiblement perpendiculairement à la seconde 228 lèvre intermédiaire. Sur l'exemple de la figure 4, la seconde 228 lèvre intermédiaire peut être inclinée par rapport à la seconde première 226 lèvre intermédiaire. Les première 226 et seconde 228 lèvres intermédiaires peuvent être configurées pour être en contact avec au moins une partie de la vitre 16 lorsque cette vitre 16 recouvre totalement l'ouverture 160.

Les figures 3 et 4 illustrent de façon non limitative d'autres lèvres d'étanchéité du premier profilé 2 pour rendre la coulisse 1 étanche par rapport aux éléments du cadre 12 de vitre. Par exemple, la portion longitudinale 22 peut comprendre des lèvres d'étanchéité 229, dites inférieures (par rapport à l'axe Y). Ces lèvres d'étanchéité inférieures 229 peuvent être au nombre de deux sur l'exemple des figures 3 et 4. Les lèvres d'étanchéité inférieures 229 peuvent s'étendre en saillie radiale, par exemple vers la carrosserie C (par rapport à l'axe Y), et le long de la portion longitudinale 22. Les lèvres d'étanchéité inférieure 229 peuvent être configurées pour être en contact avec au moins une partie de la vitre 16 lorsque cette vitre 16 recouvre totalement l'ouverture 160.

Les lèvres supérieures 222, 224, intermédiaire 226, 228 et inférieures 229 permettent ainsi d'assurer l'étanchéité, respectivement, de l'élément de carrosserie C et de la vitre 16. Au moins une des lèvres supérieures 222, 224, intermédiaires 226, 228 et inférieures 229 peuvent être formées d'un seul tenant avec la portion longitudinale 22. Sur l'exemple de la figure 3, l'ensemble des lèvres d'étanchéité 222-229 sont formées d'un seul tenant avec la portion longitudinale 22.

En référence à la figure 2, la portion longitudinale 22 peut comprendre un segment intermédiaire 22c reliant au moins une partie des premier et second segments de la portion longitudinale 22 entre elles par exemple par une attache 4c. Les premier et second segments comportent, respectivement, les première 22a et seconde 22b extrémités longitudinales.

L'attache 4c et la portion de liaison 4 peuvent être réalisées d'un même matériau (à savoir un matériau dit de surmoulage décrit ci-dessous).Tel qu'illustré sur les figures 3 et 4, la portion longitudinale 22 du premier profilé 2 peut présenter en section principale en une forme en de U. Cette portion longitudinale 22 à section U peut comprendre une portion médiane 21, dite corps longitudinal. Cette portion médiane 21 peut être recouverte d'un revêtement 24 de finition d'aspect. La portion médiane 21 peut comprendre une cavité interne 210 permettant de recevoir par exemple les panneaux extérieur et intérieur 12a, 12b.

En particulier, la portion médiane 21 peut comprendre au moins une paroi supérieure 21a, une paroi inférieure 21b et une paroi latérale 21c reliant les parois supérieure 21a et inférieure 21b entre elles. La paroi latérale 21c peut s'étendre dans le prolongement de la portion médiane 21. Les parois 21a, 21b, 21c s'étendent le long de l'axe X. Les parois 21a, 21, 21c peuvent être formées d'un seul tenant avec la portion médiane 21. La paroi supérieure 21a peut être reliée aux lèvres d'étanchéité supérieure 222, 224, la paroi inférieure 21b peut être reliée aux lèvres d'étanchéité intermédiaires 226, 228 et la paroi latérale 21c peut être au niveau du revêtement 24 de finition d'aspect du premier profilé 2. Plus particulièrement, le revêtement 24 peut recouvrir la paroi latérale 21c.

La paroi latérale 21c peut être prolongée par un bras 21d. Ce bras 21 peut s'étendre radialement vers la seconde 228 lèvre intermédiaire sous le revêtement 24. Dit autrement, le bras 21d peut être intercalé entre la seconde 228 lèvre 228 intermédiaire et le revêtement 24.

La portion médiane 21, et éventuellement le bras 21d, peut être réalisé à base de polypropylène. Ainsi, les parois 21a, 21b, 21c peuvent être réalisées à base de polypropylène.

Avantageusement, la portion médiane 21 peut être renforcée par une âme 21e métallique ou par des charges comme du talc ou de la fibre de verre (figure 4). La paroi latérale 21c et le bras 21d peuvent former un support rigide destiné à recevoir de façon robuste sans risque de flambage le revêtement 24.

Le premier profilé 2 comprend donc le revêtement 24 de finition d'aspect qui s'étend le long de ce premier profilé 2. Plus particulièrement, le revêtement 24 s'étend le long de la portion longitudinale 22 (à savoir entre ces première 22a et seconde 22b extrémités longitudinales). Sur l'exemple de la figure 2, le revêtement 24 s'étend sensiblement au centre de la portion longitudinale 22. Dit autrement, le revêtement 24 peut séparer la portion longitudinale 22 en deux morceaux radialement interne et externe (par rapport à l'axe Y).

Le revêtement 24 peut comprendre une troisième et/ou une quatrième extrémités longitudinales situées au niveau de la première extrémité longitudinale 22a et de la seconde extrémité longitudinale 22b. Ces troisième et/ou quatrième extrémités longitudinales peuvent comprendre un bord libre 24a,24b. L'un des bords 24b peut présenter une ouverture débouchant dans la cavité interne 210 de la coulisse.

De préférence, le revêtement 24 de finition d'aspect peut être réalisé dans un matériau différent de celui du premier profilé 2, notamment de la portion longitudinale 22. Le revêtement 24 comporte une surface visible esthétique/-décorative. Pour cela, le revêtement 24 comprend au moins une première finition choisie parmi une brillance, une matité, une coloration et un état de surface qui est différente du reste (notamment des profilés 2, 3, 6). De préférence, la première finition peut être choisie parmi la brillance et/ou la coloration.

La coloration du revêtement 24 peut être une coloration différente du noir.

La coloration du revêtement 24 peut être choisie parmi une coloration chromée, métal brossé, bleue, rouge, dorée ou noir brillant par exemple.

L'état de surface du revêtement 24 peut être rugueuse pouvant être obtenu par grainage ou sablage ou de texture satinée.

Le revêtement 24 peut comprendre un matériau dépourvu de particule métallique.

La brillance du revêtement 24 peut être supérieure ou égale à 70 UB (abréviation pour Unité de Brillance) à 60°. Par exemple, la brillance peut être mesurée selon la norme ISO 2813.

La matité du revêtement 24 peut être inférieure ou égale à 10 UB à 60°. Par exemple, la matité peut être mesurée également en unité de brillance et selon la norme ISO 2813.

On entend par « matité », l'apparence visuelle du revêtement qui est très peu brillant voire sans brillance.

Avantageusement, le revêtement 24 peuvent avoir module de flexion comprise entre 200 à 3000 MPa à température ambiante (par exemple comprise entre 18 et 24°C et en particulier à 23°C). Tel que mentionné ci-dessus, le module de flexion du revêtement 24 permet d'assurer une résistance à l'abrasion et d'apporter une certaine souplesse pour une intégration sans fissure/cassure.

Le revêtement 24 de brillance supérieure ou égale à 70 UB à 60° peut avoir le module de flexion comprise entre 200 et 3000 MPa à température ambiante.

Le revêtement 24 de matité inférieure ou égale à 10 UB à 60° peut avoir le module de flexion comprise entre 200 et 500 MPa à température ambiante.

A titre d'exemple, le revêtement 24 peut être réalisé à base de polypropylène (PP), polyoléfine, thermoplastique styrénique (TPS), thermoplastique vulcanisé (TPV), élastomère thermoplastique styrénique (TPES) ou élastomère thermoplastique vulcanisé (TPEV). Ces matériaux permettent d'apporter de la souplesse (ou de la déformabilité) au revêtement de finition d'aspect pour faciliter le montage de la coulisse sans endommager ce revêtement. Le revêtement 24 peut comprendre au moins un agent nucléant tel que le Sorbitol. L'agent nucléant peut être dans une proportion de 0,01 à 5% en poids.

Le revêtement 24 à base de polypropylène peut comprendre une proportion au minimum d'environ 90% en poids par rapport au poids total du revêtement 24. De préférence, cette proportion de polypropylène peut être comprise entre 90% et 99% en poids par rapport au poids total du revêtement 24. Encore plus préférentiellement, la proportion de polypropylène peut être comprise entre 95% et 99% en poids par rapport au poids total du revêtement 24. Le revêtement 24 peut avoir un écart de couleur ΔE du type Lab inférieur à 15 .

L'écart de couleur ΔE est une mesure de différence entre deux couleurs. La formule de calcul de l'écart ΔE peut être :

$$\Delta E = E_{2-1} = \sqrt{(L_2^* - L_1^*)^2 + (a_2^* - a_1^*)^2 + (b_2^* - b_1^*)^2}$$

dans laquelle $(L_1^* \, ; \, a_1^* \, ; \, b_1^*)$ et $(L_2^* \, ; \, a_1^* \, ; \, b_2^*)$ sont des paramètres de l'espace de couleur pour deux couleurs différentes.

Avantageusement, le paramètre L* peut avoir un écart ΔL (ou $L_2^* - L_1^*$ ou $L_{2-1}^*$) compris entre 1 et 5, de préférence entre 1 et 3 ; le paramètre a* peut avoir un écart Δα; (ou $a_2^* - a_1^*$ ou $a_{2-1}^*$) compris entre 0,5 et 3 et le paramètre b* peut avoir un écart Δb (ou $b_2^* - b_1^*$ ou $b_{2-1}^*$) compris entre 0,5 et 3.

Préférentiellement, l'écart ΔE peut être inférieur à 7. Dans cette configuration, l'écart ΔL peut être d'environ 5, l'écart Δa peut être d'environ 3 et l'écart Δb peut être d'environ 3.

Plus préférentiellement, l'écart ΔE peut être inférieur à 5. Dans cette configuration, l'écart ΔL peut être d'environ 3, l'écart Δa peut être d'environ 3 et l'écart Δb peut être d'environ 3.

Encore plus préférentiellement, l'écart ΔE peut être inférieur à 2.

L'écart de couleur ΔE du type Lab du revêtement 24 peut être comparé à la coloration de l'embout 5 de finition d'aspect.

Le revêtement 24 de finition d'aspect peut présenter une épaisseur inférieure à 1 mm. Ceci permet de réduire les écarts de retrait pouvant survenir vis-à-vis du premier profilé 2 coextrudé avec le revêtement 24. De préférence, l'épaisseur de ce revêtement 24 peut être comprise entre 0,25 et 0,90 mm. Une épaisseur supérieure à 0,25 mm du revêtement 24 permet notamment de contrer toute transparence du revêtement 24 vis-à-vis du premier profilé 2, et d'assurer une couverture uniforme et homogène du revêtement 24 sur le premier profilé 2.

Le second profilé 3 peut s'étendre sensiblement radialement le long de l'axe Y.

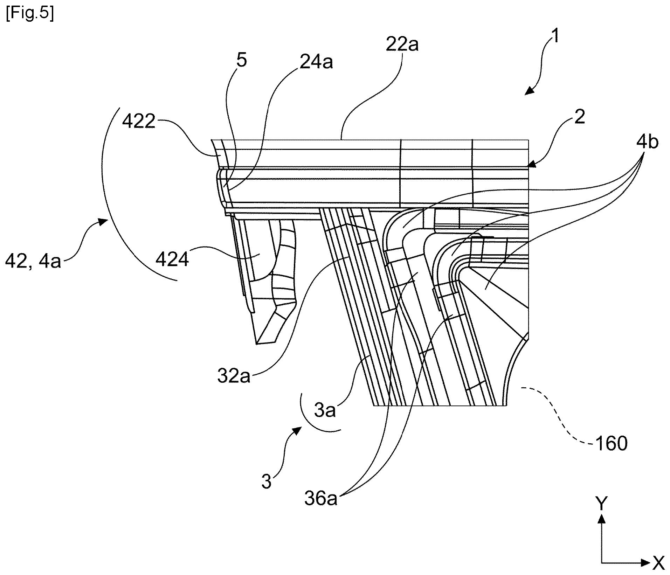

Le second profilé 3 peut comprendre des première 3a et seconde 3b extrémités radiales opposées l'une de l'autre. Ainsi, le second profilé 3 peut s'étendre entre les première 3a et seconde 3b extrémités radiales. En référence à la figure 5, la première extrémité radiale 3a peut être divisée en deux bouts d'extrémité, respectivement, premier 32a et second 36a. La première extrémité radiale 3a peut être reliée de façon sécante au premier profilé 2, notamment sur la première 22a extrémité longitudinale.

La coulisse 1 peut ainsi présenter la forme générale en L ou V lorsque les premier et second profilés 2, 3 sont reliés entre eux. La seconde extrémité radiale 32 peut être insérée dans caisson 14 inférieure de la porte.

En particulier, la coulisse 1 comprend une première portion 42 de liaison configurée pour relier les premier 2 et second 3 profilés. Plus particulièrement, la première portion 42 est configurée pour relier la première extrémité radiale 3a à la première 22a extrémité longitudinale. Cette première portion 42 peut être située en extrémité du premier profilé 2 et/ou du second profilé 3, elle forme ainsi une portion d'extrémité 4a de liaison.

En référence à la figure 5, la première portion 42 peut comprendre donc la portion d'extrémité 4a permettant de relier le premier bout d'extrémité 32a à la portion longitudinale 22 (notamment à la première extrémité longitudinale 22a). La première portion 42 peut comprendre également une portion courbée 4b de liaison. Cette portion courbée 4b est configurée pour relier le second bout d'extrémité 36a à la portion longitudinale 22 (notamment à la première extrémité longitudinale 22a).

La coulisse 1 peut comprendre un troisième profilé 6 relié également de façon sécante au premier profilé 2. Le troisième profilé 6 peut s'étendre sensiblement le long de l'axe Y. Le troisième profilé 6 peut s'étendre sensiblement parallèlement au second profile 3, de façon à former la forme en U de la coulisse 1.

Le troisième profilé 6 peut comprendre des troisième 6a et quatrième 6b extrémités radiales opposées l'une de l'autre. La troisième extrémité radiale 6a peut être reliée de façon sécante au premier profilé 2, notamment au niveau de la seconde 22b extrémité longitudinale (figure 2). La quatrième extrémité radiale 6b peut être reliée au caisson 14 de porte.

En particulier, la coulisse 1 peut comprendre une seconde portion 44 de liaison configurée pour relier les premier 2 et troisième 6 profilés. Plus particulièrement, la seconde portion 44 est configurée pour relier la troisième extrémité radiale 6a à la seconde 22b extrémité longitudinale. Cette seconde portion 44 peut être en extrémité du premier profilé 2 et/ou du troisième profilé 6 et former ainsi une portion d'extrémité 4a de liaison.

L'une des particularités de l'invention pour simplifier la fabrication et le montage de la coulisse 1, est que :

- le revêtement 24 et le premier profilé 2 sont formés d'un seul tenant par co-extrusion,
- le second profilé 3 (et/ou le troisième profilé 6) est formé par co-extrusion,
- une ou plusieurs des portions de liaison 4, 4a, 4b est/sont formée(s) par un matériau de surmoulage, et
- la coulisse 1 comprend au moins un embout 5, 5a, 5b de finition d'aspect.

En particulier, la portion longitudinale 22 est co-extrudée avec le revêtement 24 de façon à former le premier profilé 2 d'un seul tenant. Ceci permet de simplifier la réalisation et le montage de la coulisse 1 et de réduire ainsi les coûts de production. Le second profilé 3 (et/ou le troisième profilé 6) est également réalisé par extrusion, de manière à uniformiser et simplifier la réalisation de la coulisse.

On entend par « co-extrusion », au moins deux éléments par exemple de textures et/ou de fonctions différentes qui sont extrudés ensemble et simultanément pour former une pièce unique d'un seul tenant. Dans le cas du premier profilé 3, la portion longitudinale 22 peut présenter une texture et également une fonction (à savoir d'étanchéité) différentes de celles du revêtement 24 de finition d'aspect.

La portion de liaison 4, qu'elle soit d'extrémité 4a ou courbée 4b, peut être formée par surmoulage (ou moulage). Le matériau de surmoulage est choisi parmi un thermoplastique styrénique (TPS), thermoplastique vulcanisé (TPV), élastomère thermoplastique (TPE), élastomère thermoplastique styrénique (TPES) et un élastomère thermoplastique vulcanisé (TPEV). Le thermoplastique vulcanisé pouvant comporter du polypropylène (PP) et/ou de l'éthylène-propylène-diène monomère (EPDM). Le thermoplastique styrénique peut compoter du poly(styrène-butadiène-styrène) (SBS).

L'embout 5 est situé à la première extrémité longitudinale 22a et/ou la seconde extrémité longitudinale 22b du premier profilé et du revêtement 24 (notamment au niveau d'au moins une des extrémités longitudinales du revêtement 24). La figure 2 illustre de façon non-limitative deux embouts 5, 5a, 5b sur la coulisse 1.

Avantageusement, un premier embout 5a peut recouvrir le bord 24a du revêtement 24, et/ou un second embout 5b peut recouvrir le bord 24b du revêtement 24. L'embout 5, 5a, 5b permet notamment de fermer latéralement au moins une partie du premier profilé 2 (notamment la cavité interne 210 au niveau du bord 24a, 24b).

De préférence, l'embout 5 peut être réalisé dans un matériau différent de celui du reste du profilé (2, 3, 6), notamment de la portion longitudinale 22. L'embout 5 comporte une surface visible esthétique/décorative. L'embout 5 peut avoir au moins une seconde finition choisie parmi une brillance, une matité, une coloration et un état de surface. De préférence, la seconde finition peut être une matité et/ ou un état de surface.

La seconde finition de l'embout 5 peut être identique à la première finition du revêtement 24 de finition d'aspect. En variante, la seconde finition de l'embout 5 peut être différente de la première finition du revêtement 24 de finition d'aspect. Par exemple, la seconde finition peut présenter une matité différente de celle de la première finition. Selon un autre exemple, la première finition peut présenter une coloration et/ou une brillance différente de celle(s) de la seconde finition.

La coloration de l'embout 5 peut être une coloration différente du noir.

Selon un autre exemple, la seconde finition peut présenter une matité et/ou un état de surface différent(s) de celle(s) de la première finition.

L'embout 5 peut ainsi présenter une coloration choisie parmi une coloration chromée, métal brossé ou noir brillant par exemple.

L'embout 5 peut comprendre un matériau dépourvu de particule métallique. L'embout 5 peut présenter une brillance supérieure ou égale à 70 UB mesurée à 60°. La matité de l'embout 5 peut être inférieure ou égale à 10 UB à 60°.

Avantageusement, l'embout 5 peut avoir un module de flexion compris entre 200 et 3000 MPa à température ambiante. Par exemple, l'embout 5 ayant la brillance supérieure ou égale à 70 UB à 60° peut avoir le module de flexion comprise entre 200 et 3000 MPa à température ambiante. L'embout 5 ayant la matité inférieure ou égale à 10 UB à 60° peut avoir le module de flexion comprise entre 200 et 500 MPa à température ambiante.

L'embout 5 peut présenter un état de surface qui peut être rugueux pouvant être obtenu par grainage ou sablage ou de texture satinée.

L'embout 5 peut être réalisé en monomatière ou en bimatière.

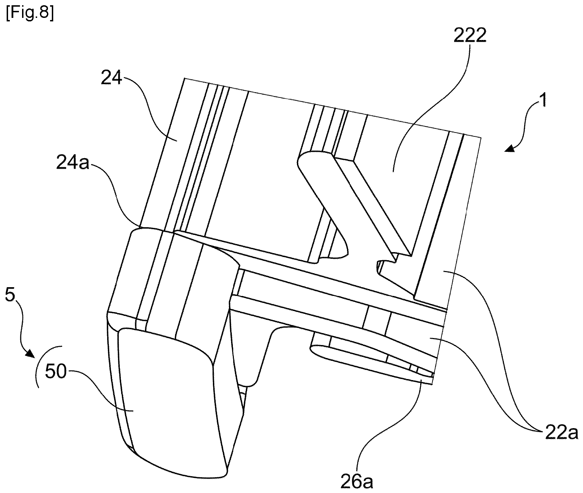

L'embout 5 peut être rapporté (figure 8) notamment sur le premier profilé 2 (notamment sur la première extrémité longitudinale 22a et le revêtement 24 de finition d'aspect), ou être formé (figure 5 à 7) par surmoulage d'un matériau d'aspect. Le matériau d'aspect peut être différent du matériau de surmoulage formant l'au moins une portion de liaison 4, 4a, 4b. Le matériau d'aspect peut être à base de polypropylène, polyoléfine, thermoplastique styrénique (TPS), thermoplastique vulcanisé (TPV), élastomère thermoplastique styrénique (TPES) ou élastomère thermoplastique vulcanisé (TPEV).

Le matériau d'aspect de l'embout 5 à base de polypropylène peut comprendre une proportion au minimum d'environ 90% en poids par rapport au poids total de l'embout 5. De préférence, cette proportion de polypropylène peut être comprise entre 90% et 99% en poids par rapport au poids total de l'embout 5. Encore plus préférentiellement, la proportion de polypropylène peut être comprise entre 95% et 99% en poids par rapport au poids total de l'embout 5.

L'embout 5 peut comprendre au moins un agent nucléant tel que le Sorbitol. L'agent nucléant peut être dans une proportion de 0,01 à 5% en poids.

L'embout 5 peut avoir un écart de couleur $\Delta E$ du type Lab inférieur à 15. Préférentiellement, cet écart $\Delta E$ est inférieur à 7. Plus préférentiellement, cet écart $\Delta E$ est inférieur à 5. Encore plus préférentiellement, cet écart $\Delta E$ est inférieur à 2.

Avantageusement, la coulisse 1 peut être, de préférence intégralement, composée de matériaux recyclables à base de polypropylène recyclé.

La présente demande va maintenant décrire les différentes intégrations possibles de l'embout 5 de finition d'aspect, notamment du premier embout 5a, dans la coulisse 1 de l'invention.

Les figures 5 à 7 illustrent un premier mode de réalisation non limitatif de la coulisse 1 dans laquelle le premier embout 5a est formé par surmoulage par exemple avec le matériau d'aspect.

La coulisse 1 selon le premier mode de réalisation comprend au moins les premier 2 et second 3 profilés, et éventuellement le troisième profilé 6, tels que décrit ci-dessus. Ces premier 2 et second 3 profilés sont reliés entre eux de façon sécante par au moins la portion de liaison 4 telle que décrite ci-dessus. Cette portion de liaison 4 peut comprendre la première portion 42 de liaison configurée pour relier les premier 2 et second 3 profilés, et/ou la seconde portion 44 de liaison configurée pour relier les premier 2 et troisième 6 profilés.

Sur l'exemple des figures 5 à 7, la première portion 42 peut comprendre la portion d'extrémité 4a de liaison. Cette portion d'extrémité 4a peut comprendre au moins : - un bout longitudinal 422 relié à la portion longitudinale 22 (par rapport à l'axe X), et - un bout radial 424 (par rapport à l'axe Y) relié au bout longitudinal 422 et à la première extrémité 22a de la portion longitudinale 22.

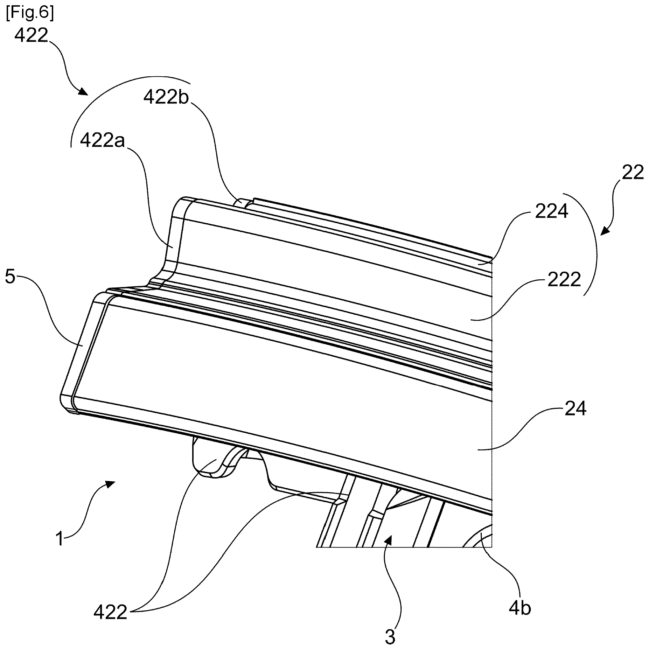

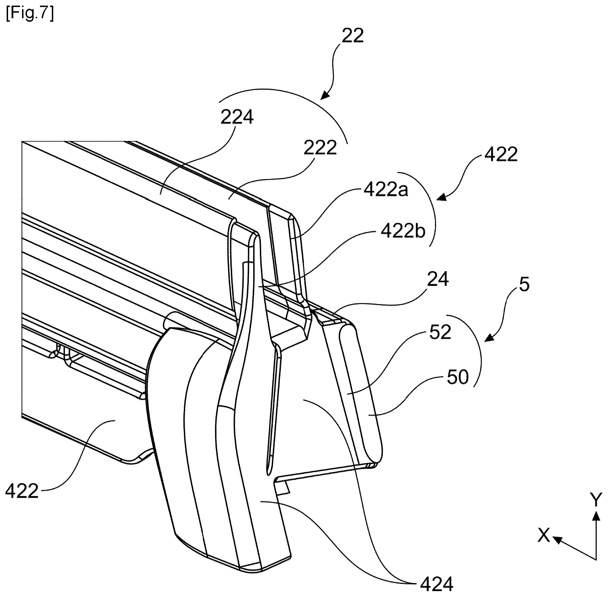

Tel qu'illustré sur les figures 6 et 7, le bout longitudinal 422 peut s'étendre de la première extrémité longitudinale 22a. Plus particulièrement, le bout longitudinal 422 peut permettre également d'assurer l'étanchéité de l'élément de carrosserie C. Pour cela, le bout longitudinal 422 peut s'étendre de chacune des lèvres supérieures 222, 224 de la portion longitudinale 22. Par exemple, le bout longitudinal 422 peut comprendre une première fraction 422a s'étendant de la première lèvre d'étanchéité supérieure 222 et une seconde fraction 422b s'étendant de la seconde lèvre d'étanchéité supérieure 224.

Tel qu'illustré sur l'exemple des figures 5 à 7, le bout longitudinal 422 peut être relié également au premier bout d'extrémité 32a du second profilé 3.

Le bout radial 424 peut s'étendre radialement (notamment en direction du corps 14 de porte) de du bout longitudinal 422, tel qu'illustré sur la figure 5 et 7.

Le bout longitudinal et le bout radial 424 peuvent être formés d'un seul tenant notamment par le matériau de surmoulage.

La première portion 42 peut comprendre la portion courbée 4b de liaison. Cette portion courbée 4b peut relier le second bout d'extrémité 36a à la première extrémité longitudinale 22a par au moins une partie du bout longitudinal 422.

Sur l'exemple des figures 5 à 7, la première portion 42 peut être formée de la portion d'extrémité 4a (telle que les bouts longitudinal 422 et radial 424) et de la portion courbée 4b. Ces portions d'extrémité 4a et courbée 4b peuvent être formées d'un seul tenant avec les premier 2 et second 3 profilés par le matériau de surmoulage.

Selon le premier mode de réalisation, l'embout 5, 5a de finition d'aspect peut comprendre des première 50 et seconde 52 parties reliées entre elles par exemple de façon monobloc. La première partie 50 peut former la partie extérieure visible du premier embout 5a. La seconde partie 52 peut être intercalée entre la première partie 50 et au moins une partie du bout radial 424.

Le premier embout 5a selon le premier mode de réalisation peut être réalisé en bimatière. La première partie 50 peut être réalisée avec le matériau d'aspect qui peut comprendre au moins une finition identique au revêtement 24 et former l'embout 5 recouvrant le bord 24a du revêtement 24. Ceci permet de réaliser une finition continue et uniforme entre l'embout 5, 5a et le revêtement 24, et ainsi renforcer significativement l'aspect esthétique de la coulisse 1. La seconde partie 52 peut être réalisée avec le matériau d'aspect qui peut être identique au matériau de surmoulage de la première portion 42 de liaison. Ceci permet de réaliser le premier embout 5 monobloc et d'un seul tenant avec la première portion 42 de liaison, et ainsi rendre plus robuste l'intégration de cet embout 5, 5a dans la coulisse 1.

La figure 8 illustre un second mode de réalisation non limitatif de la coulisse 1 de l'invention qui diffère de la coulisse 1 du premier mode de réalisation par l'embout 5, 5a, 5b qui est injecté ou rapporté sur le premier profilé 2. La coulisse 1 selon le second mode de réalisation comprend au moins les premier 2 et second 3 profilés, et éventuellement le troisième profilé 6, tels que décrits ci-dessus. Ces premier 2 et second 3 profilés sont reliés entre eux de façon sécante par au moins la portion de liaison 4 telle que décrite ci-dessus. Cette portion de liaison 4 peut comprendre la première portion 42 de liaison configurée pour relier les premier 2 et second 3 profilés (non visible sur la figure 8), et/ou la seconde portion 44 de liaison configurée pour relier les premier 2 et troisième 6 profilés.

En particulier, le premier embout 5a peut être une pièce distincte qui est assemblée sur le bord 24a du revêtement 24 et au moins en partie sur la première extrémité longitudinale 22a du premier profilé. Le second embout 5b peut être aussi une pièce distincte qui est assemblée sur le bord 24b du revêtement 24 et au moins en partie sur la seconde extrémité longitudinale 22b. Le second embout 5b recouvre le bord 24b sur l'exemple de la figure 8.

L'embout 5, 5a, 5b du second mode de réalisé peut être réalisé en monomatière. La première partie 50 peut être réalisée avec le matériau d'aspect. Ce matériau d'aspect peut comprendre au moins une finition identique à celle du revêtement 24 de finition d'aspect. Ceci permet également de réaliser une finition continue et uniforme entre l'embout 5 et le revêtement 24, et donc renforcer significativement l'aspect esthétique de la coulisse 1.

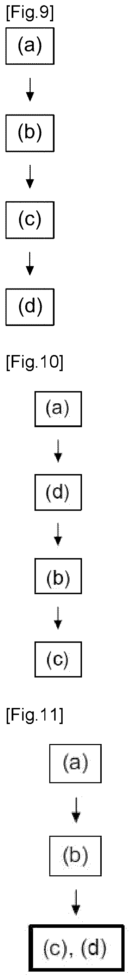

La présente demande va maintenant décrire un procédé de fabrication de la coulisse 1 de l'invention, dont les étapes successives du procédé sont par exemple résumées sur les figures 9 à 11.

Conformément à l'invention, le procédé comprend les étapes suivantes :

(a) réalisation des premier et second profilés 2, 3, indépendamment l'un de l'autre par co-extrusion,

(b) positionnement des premier et second profilés 2, 3 dans un moule,

(c) injection du matériau de surmoulage dans le moule pour former l'au moins une portion 4 de liaison des premier et second profilés 2, 3, et

(d) formation ou montage de l'embout 5 de finition d'aspect sur l'extrémité longitudinale 22a, 22b du premier profilé 2.

L'étape (d) peut être réalisée avant l'étape (b), après l'étape (c), ou simultanément à l'étape (c).

A l'étape (a), chacun des premier et second profilés 2, 3 comporte au moins une des lèvres d'étanchéité 222-229, telles que décrites ci-dessus. Le revêtement 24 de finition d'aspect est co-extrudé avec le reste du premier profilé 2.

A l'étape (b), le moule peut comprendre plusieurs cavités de réception des premier 2 et second 3 profilés et de formation de la portion de liaison 4 par surmoulage. Par exemple, le moule peut comprendre des première et seconde cavités de réception, respectivement, des premier 2 et second 3 profilés, et une troisième cavité de formation de la portion de liaison 4. Cette troisième cavité est située entre les première et seconde cavités de façon à former les premier 2 et second 3 profilés sécants. La troisième cavité peut présenter la forme de la première portion 42 de liaison pour relier les premier 2 et second 3 profilés ou de la seconde portion 44 de liaison pour relier les premier 2 et troisième 6 profilés.

En référence à la figure 9 et selon un premier exemple, le procédé de fabrication de la coulisse 1 peut comprendre dans l'ordre les étapes (a) à (d). Dans ce premier exemple, l'étape (d) de formation de l'embout 5 de finition d'aspect est réalisée après l'étape (c) par surmoulage, dans un moule différent de celui utilisé pour l'étape (c) d'injection du matériau de surmoulage.

Plus particulièrement, l'embout 5 peut être formée par surmoulage, par exemple avec le matériau d'aspect, sur l'au moins une des extrémités longitudinales 22a, 22b du premier profilé 2 et du revêtement 24 de finition d'aspect.

En référence à la figure 10 et selon un second exemple de réalisation du procédé de fabrication de la coulisse 1, l'étape (d) de formation de l'embout 5 de finition d'aspect est réalisée avant l'étape (b) par surmoulage dans un moule différent de celui utilisé pour l'étape (c) d'injection du matériau de surmoulage. L'embout 5 est formé par surmoulage du matériau d'aspect.

La figure 10 illustre ce troisième exemple qui peut comprendre dans l'ordre les étapes suivantes :

(a) réalisation des premier et second profilés 2, 3, indépendamment l'un de l'autre par co-extrusion,
(d) formation de l'embout 5 de finition d'aspect sur l'extrémité longitudinale 22a, 22b du premier profilé 2, par surmoulage (par exemple avec le matériau d'aspect) dans un premier moule,
(b) positionnement des premier et second profilés 2, 3 avec l'embout 5 dans un second moule, et
(c) injection du matériau de surmoulage dans le second moule pour former l'au moins une portion 4 de liaison des premier et second profilés 2, 3.

Selon un troisième exemple de réalisation du procédé, l'étape (d) de montage de l'embout 5 de finition d'aspect est réalisée avant l'étape (b) ou après l'étape (c), l'embout 5 étant préalablement réalisé par injection-moulage.

Ce troisième exemple peut comprendre dans l'ordre les étapes suivantes :

(a) réalisation des premier et second profilés 2, 3, indépendamment l'un de l'autre par co-extrusion,
(d) formation au préalable de l'embout 5 de finition d'aspect et montage sur l'extrémité longitudinale 22a, 22b du premier profilé 2,
(b) positionnement des premier et second profilés 2, 3 avec l'embout 5 dans le moule, et
(c) injection du matériau de surmoulage dans le moule pour former l'au moins une portion 4 de liaison des premier et second profilés 2, 3.

Selon un quatrième exemple de réalisation du procédé, les étapes (c) et (d) sont réalisées simultanément par bi-injection du matériau de surmoulage pour former l'au moins une portion de liaison 4, 4a, 4b, et du matériau d'aspect pour former l'embout 5.

La figure 11 illustre ce quatrième exemple qui peut comprendre dans l'ordre les étapes suivantes :

(a) réalisation des premier et second profilés 2, 3, indépendamment l'un de l'autre par co-extrusion,
(b) positionnement des premier et second profilés 2, 3 dans le moule, et
(c) et (d) injection ou bi-injection du matériau de surmoulage dans le moule pour former l'au moins une portion 4 de liaison des premier et second profilés 2, 3, et du matériau d'aspect pour former l'embout 5 de finition d'aspect.

Selon une variante de réalisation de ce quatrième exemple, le matériau de surmoulage pour former la portion 4 de liaison peut être identique au matériau d'aspect pour former l'embout 5. Par exemple, le matériau de surmoulage peut être identique au matériau d'aspect lorsque l'embout 5 présente une seconde finition qui est mate.

Selon une autre variante de réalisation du quatrième exemple, les étapes (c) et (d) peuvent être réalisées par bi-injection lorsque le matériau de surmoulage pour former la portion 4 de liaison est différent du matériau d'aspect pour former l'embout 5.

Dans la présente demande, on distingue une simple injection d'une bi-injection (ou dit autrement multi-injection). Une simple injection peut être définie comme une injection d'un seul et unique matériau dans le moule, alors qu'une bi-injection peut être définie comme deux injections à partir généralement de deux matériaux différents dans un même moule.

## Revendications

**1.** Coulisse (1) pour un cadre (12) de vitre mobile d'un véhicule, cette coulisse (1) comprenant au moins des premier et second profilés (2, 3) comportant chacun au moins une lèvre d'étanchéité (222-228, 262, 264) et reliés entre eux de façon sécante par au moins une portion (4) de liaison, ledit premier profilé (2) comportant un revêtement (24) de finition d'aspect qui s'étend le long de ce premier profilé (2) et qui comprend au moins une première finition choisie parmi une brillance, une matité, une coloration et un état de surface différente de celle du reste du profilé, **caractérisée en ce que** :

- le premier profilé (2) est formé par co-extrusion avec ledit revêtement (24) de finition d'aspect,
- le second profilé (3) est formé par co-extrusion, et
- ladite au moins une portion (4) de liaison est formée par un matériau de surmoulage, et **en ce que** la coulisse (1) comprend au moins un embout (5) de finition d'aspect qui est situé à au moins une extrémité longitudinale (22a, 22b) dudit premier profilé (2) et dudit revêtement (24) de finition d'aspect, cet embout (5) ayant au moins une seconde finition choisie parmi une brillance, une matité, une coloration et un état de surface .

2. Coulisse (1) selon la revendication 1, **caractérisée en ce que** l'embout (5) de finition d'aspect et/ou le revêtement (24) de finition d'aspect ont une brillance supérieure ou égale à 70 UB à 60° et/ou un module de flexion compris entre 200 et 3000 MPa à température ambiante.

3. Coulisse (1) selon la revendication 1, **caractérisée en ce que** l'embout (5) de finition d'aspect et/ou le revêtement (24) de finition d'aspect ont une matité inférieure ou égale à 10 UB à 60° et/ou un module de flexion compris entre 200 et 500MPa à température ambiante.

4. Coulisse (1) selon la revendication 1, **caractérisée en ce que** l'embout (5) de finition d'aspect et/ou le revêtement (24) de finition d'aspect comportent un matériau avec un écart de couleur ($\Delta E$) du type Lab inférieur à 15 ; préférentiellement cet écart ($\Delta E$) est inférieur à 7 ; plus préférentiellement cet écart ($\Delta E$) est inférieur à 5 ; encore plus préférentiellement cet écart ($\Delta E$) est inférieur à 2.

5. Coulisse (1) selon l'une des revendications précédentes, **caractérisée en ce que** l'embout (5) de finition d'aspect et/ou le revêtement (24) de finition d'aspect comportent un matériau dépourvu de particule métallique.

6. Coulisse (1) selon l'une quelconque des revendications précédentes, **caractérisée en ce que** ledit embout (5) de finition d'aspect est rapporté ou est formé par surmoulage d'un matériau d'aspect.

7. Coulisse (1) selon l'une quelconque des revendications précédentes, **caractérisée en ce que** ledit revêtement (24) de finition d'aspect, voire ledit embout (5) de finition d'aspect, comprend une matière de finition d'aspect à base de polypropylène (PP), polyoléfine thermoplastique styrénique (TPS), thermoplastique vulcanisé (TPV), élastomère thermoplastique styrénique (TPES) ou élastomère thermoplastique vulcanisé (TPEV), et/ou peut comprendre au moins un agent nucléant dans une proportion de 0,01 à 5% en poids.

8. Coulisse selon l'une quelconque des revendications précédentes, **caractérisée en ce que** les première et seconde finitions sont identiques.

9. Coulisse selon l'une quelconque des revendications précédentes, **caractérisée en ce que** la seconde finition est choisie parmi une matité et/ou un état de surface.

10. Coulisse selon l'une quelconque des revendications précédentes, **caractérisée en ce que** le revêtement (24) de finition d'aspect présente une épaisseur inférieure à 1 mm , et de préférence, l'épaisseur de ce revêtement 24 est comprise entre 0,25 et 0,90 mm.

11. Véhicule (100), en particulier automobile, comportant au moins une coulisse (1) selon l'une quelconque des revendications précédentes.

12. Procédé de fabrication d'une coulisse (1) selon l'une quelconque des revendications 1 à 10, **caractérisé en ce que** le procédé comprend les étapes suivantes :

(a) réalisation des premier et second profilés (2, 3), indépendamment l'un de l'autre par coextrusion, chacun des premier et second profilés (2, 3) comportant au moins une lèvre d'étanchéité (222-228, 262, 264), le premier profilé (2) comportant ledit revêtement (24) de finition d'aspect qui est co-extrudé avec le reste de ce premier profilé (2),
(b) positionnement des premier et second profilés (2, 3) dans un moule, et
(c) injection d'un matériau de surmoulage dans le moule pour former ladite au moins une portion (4) de liaison desdits premier et second profilés (2, 3), et

(d) formation ou montage de l'embout (5) de finition d'aspect sur ladite extrémité longitudinale (22a, 22b) dudit premier profilé (2) et dudit revêtement (24) de finition d'aspect, l'étape (d) étant réalisée avant l'étape (b), après l'étape (c), ou simultanément à l'étape (c).

13. Procédé de fabrication selon revendication précédente, **caractérisé en ce que** l'étape (d) de formation de l'embout (5) de finition d'aspect est réalisée après l'étape (c) ou avant l'étape (b) par surmoulage, dans un moule différent de celui utilisé pour l'étape (c) d'injection du matériau de surmoulage .

14. Procédé de fabrication selon la revendication 12, **caractérisé en ce que** l'étape (d) de montage de l'embout (5) de finition d'aspect est réalisée avant l'étape b) ou après l'étape (c), l'embout étant préalablement réalisé par injection-moulage.

15. Procédé de fabrication selon la revendication 12, **caractérisé en ce que** les étapes (c) et (d) sont réalisées simultanément par injection ou bi-injection du matériau de surmoulage pour former ladite au moins une portion (4) de liaison, et d'un matériau d'aspect pour former ledit embout.

[Fig.1]

[Fig.2]

[Fig.3]

[Fig.4]

[Fig.5]

[Fig.6]

[Fig.7]

[Fig.8]

[Fig.9]

[Fig.10]

[Fig.11]

| | Europäisches Patentamt European Patent Office Office européen des brevets | **RAPPORT DE RECHERCHE EUROPEENNE** | **Numéro de la demande** EP 24 22 0381 |
|---|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | JP 2001 322436 A (KINUGAWA RUBBER IND) 20 novembre 2001 (2001-11-20) * alinéas [0020], [0024]; figures 1, 5, 7 * ----- | 1-15 | INV. B60J10/21 B60J10/265 B60J10/76 B60J10/88 |
| Y | WO 2014/188004 A1 (COOPER STANDARD GMBH [DE]) 27 novembre 2014 (2014-11-27) * page 17, alinéa 7; figure 11 * ----- | 1-15 | |
| A | JP 2007 320369 A (TOYODA GOSEI KK) 13 décembre 2007 (2007-12-13) * alinéas [0043] - [0046]; figure 1 * ----- | 1,11 | |
| | | | **DOMAINES TECHNIQUES RECHERCHES (IPC)** B60J |

Le présent rapport a été établi pour toutes les revendications

| Lieu de la recherche | Date d'achèvement de la recherche | Examinateur |
|---|---|---|
| La Haye | 24 avril 2025 | Verkerk, Ewout |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

......................................................................

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 24 22 0381

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-04-2025

| Document brevet cité au rapport de recherche | Date de publication | Membre(s) de la famille de brevet(s) | Date de publication |
|---|---|---|---|
| JP 2001322436 A | 20-11-2001 | JP 3889203 B2 | 07-03-2007 |
| | | JP 2001322436 A | 20-11-2001 |
| WO 2014188004 A1 | 27-11-2014 | AUCUN | |
| JP 2007320369 A | 13-12-2007 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2001322436 A
- WO 2014188004 A1
- JP 2007320369 A